# EUROPEAN PATENT APPLICATION

(11) **EP 2 003 580 A1**
(43) Date of publication of application: **17.12.2008**
(21) Application number: 07110215.6
(22) Date of filing: 13.06.2007
(51) Int. Cl.: G06F 17/50

(54) **Device and method for evaluating usability of a system by simulating the interaction between a user and the system**

(71) Applicant: Deutsche Telekom AG, 53113 Bonn (DE); Technische Universität Berlin, 10623 Berlin (DE)
(72) Inventor: Englert, Roman, 53913 Swisstal (DE); Möller, Sebastian, 10405 Berlin (DE); Schleicher, Robert, 10785 Berlin (DE); Kruppa, Michael, 10437 Berlin (DE); Jameson, Anthony, 66111 Saarbrücken (DE)
(74) Representative: Vossius & Partner

(57) **Abstract**

A usability evaluation processing system and method for evaluating usability by simulation of an interaction between a user and a system to be evaluated, the usability evaluation processing system comprising a user behavior model unit, a system to be evaluated model unit, an automatic testing unit connected to the user behavior model unit and the system model unit, and an evaluation unit connected to the automatic testing unit, wherein a probabilistic model through a state chart given by the system is used for the user behavior model.

## Description

### Field of the invention

The present invention relates to the modeling of usability evaluation of interactive systems or devices. Such systems are, for example, consumer products such as TV sets, DVD players, answering machines, or more complex systems such as automatic blinds or lighting systems of buildings that are programmable by a user via a menu or speech. Other interactive devices include control panels of machines, e.g. in CAD/CIM systems, or manufacturing plants, or Graphical User Interfaces (GUIs), for example.

### Background of the invention

Interactive systems, such as Graphical User Interfaces (GUIs), Spoken Dialogue Systems (SDSs, also called Voice User Interfaces (VUIs), or multimodal dialogue systems, have reached a level of maturity which is sufficient for a number of realistic task-oriented applications. Still, interactions between user and system are often not sufficiently smooth and error-free. The sources of interaction problems are difficult to identify, because of the complex interrelationship between the modules of an interactive system, and because of the lack of knowledge about the background of the user (what s/he wants, what s/he knows, what s/he likes etc.).

The non-triviality of interactive system design has raised the demand for efficient, valid and reliable assessment and evaluation methods, So far, interactive systems are mainly evaluated by carrying out laboratory experiments with real users where system performance and interaction behavior are quantified in terms of parameters (e.g. task completion time, number of turns, word error rate, see e.g. Möller, S. (2005), Quality of Telephone-based Spoken Dialogue Systems, Springer, US-New York NY, for a spoken dialogue system). In addition, perceived quality and usability can be measured in terms of user judgments on different quality aspects, or by usability heuristics. Such studies are costly and require special expertise and resources.

In order to reduce the burden of such studies, automatic quality and usability evaluation methods are necessary. Several approaches have been made to accomplish this aim.

For spoken dialogue systems, Araki and Doshita (Araki, M. and Doshita, S. (1997), "Automatic Evaluation Environment for Spoken Dialogue Systems", in: Proc. ECAI'96 Workshop, Lecture Notes in Artificial Intelligence No. 1236, 183-194, Springer, Berlin) installed a mediator between a SDS and a simulated user, consisting basically of another SDS. The mediator introduced random noise into the communication channel; this was used to study the system's robustness against speech recognition errors. Similarly, López-Cózar et al. (López-Cózar, R., de la Torre, A., Segura, J.C., and Rubio, A.J. (2003), "Assessment of Dialogue Systems by means of a New Simulation Technique", Speech Communication, 40: 387-407) proposed a rule-based user simulator which generates user prompts from a corpus of utterances previously collected in human-human dialogues. Others have also considered addressing psychological factors like cognitive and communicative strategies and error recovery strategies of users.

In the broader field of human-computer interaction, there have been various attempts to employ simulations of users as a way of identifying usability problems or evaluating usability. If the focus is on non-expert users, a difficult part of this task is the creation of a simulation model that faithfully represents at least some aspects of the behavior of novice users. Some good results were obtained by using genetic algorithms to create deviations from an expert model that seemed typical of novice users.

Many approaches to the analysis and evaluation of users' performance on the basis of interaction logs have been developed. With various methods, individual data events (such as errors) or patterns of events are identified in logs, and in some cases overall usability-related metrics are computed. A typical limitation to the possibilities for interpretation concerns lack of knowledge of the user's goal and methods. This limitation is less of a problem in the present invention, since the logs in question concern the use of a system by a simulated user whose goals and methods are known to the analyst.

A new approach for facilitating usability evaluations which is based on error simulations is suggested in Möller, S., Englert, R., Engelbrecht, K., Hafner, V., Jameson, A., Oulasvirta, A., Raake, A., Reithinger, N. (2006), MeMo: Towards Automatic Usability Evaluation of Spoken Dialogue Services by User Error Simulations, in: Proc. 9th Int. Conf. on Spoken Language Processing (Interspeech 2006 - ICSLP), US-Pittsburgh PA, 1786-1789. It will be described in more detail below with reference to the accompanying drawings.

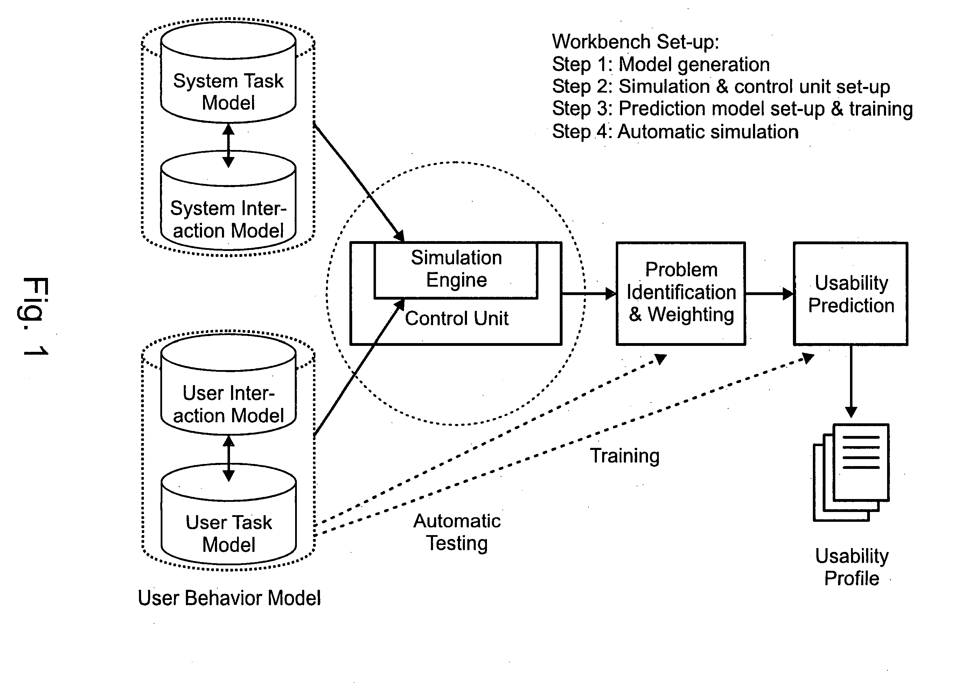

The general structure underlying the invention is shown in Fig. 1.

The procedure is based on the set-up of models which describe the behavior of the user and the system in a typical interaction. These models describe the actions of the user (e.g. clicking a button, writing in a text field, moving the mouse, utter a sentence, etc.) as well as the ones of the system (e.g. display a GUI, highlight an element in the GUI, utter a spoken prompt, etc.) during the interaction. The models are derived on the basis of theoretical considerations (e.g. user error classifications, usability expert knowledge, usability guidelines, etc.) as well as from empirical data, i.e. from test interaction loggings. The system shown in Fig. 1 consists of four models, i.e., the user task model, the system task model, the system interaction model, and the user interaction model.

User and system models provide input to an automatic testing unit - the core of the system. This unit hosts user and system models in the automatic testing cycle; it simulates interactions and generates loggings. The log-protocols serve the automatic detection of estimated (and potentially erroneous) user behavior, and include discrepancies between user and system models, resulting in problematic interactions. Using appropriate weighting of the discrepancies, a prediction algorithm derives a usability profile from the protocols. This usability profile describes the impact of errors in terms of performance and quality indicators, related to effectiveness, efficiency, and user satisfaction.

### Summary of the Invention

The present invention is specified by the claims. The invention starts out from the idea to use a probabilistic model for providing the user interaction model of the system. In more detail, the invention provides a probabilistic model through a state-chart given by the system. According to a second aspect of the invention, a usability profile is derived by simulating the user behavior using classification of erroneous input.

According to a first aspect of the invention, a usability evaluation processing system for evaluating usability by simulation of an interaction between a user and a system to be evaluated is provided. The usability evaluation processing system preferably comprises a user behavior model unit, a system to be evaluated model unit, an automatic testing unit connected to the user behavior model unit and the system model unit, and an evaluation unit connected to the automatic testing unit, wherein a probabilistic model through a state chart given by the system is used for the user behavior model.

According to a second aspect of the invention, a usability evaluation processing system for evaluating usability by simulation of an interaction between a user and a system to be evaluated is provided. The usability evaluation processing system comprises a user behavior model unit, a system to be evaluated model unit, an automatic testing unit connected to the user behavior model unit and the system model unit, and an evaluation unit connected to the automatic testing unit, wherein user behavior is simulated using rule-based generation of erroneous input according to error classification.

For both aspects it is preferred that the user behavior model unit comprises a user task model unit and a user interaction model unit. The user task model represents potential user tasks with the system to be evaluated, and the user interaction model automatically generates user input by simulation.

The system model unit preferably comprises a system task model unit and a system interaction model unit. The system task model describes the tasks a user may perform with the help of the system, and the system interaction model describes the flow of interaction coded in the system to be evaluated.

The automatic testing unit preferably comprises a control unit and a simulation unit for simulation interactions and generating log protocols.

The evaluation unit preferably comprises a discrepancies determination unit for determining discrepancies between user and system model, and a discrepancies weighting unit. It may also comprise a usability prediction unit for deriving a usability profile.

According to the first aspect of the invention, the evaluation processing system is adapted to generate potential deviations, for each task, from an optimum or intended path through the interaction, and to assign probabilities to each possible path potentially taken by the user. The probabilities are preferably pre-calculated. As an option, the system provides for modification of the pre-calculated probabilities or the addition of further probabilities by the user. According to a preferred embodiment, the automatic testing unit is adapted to request a task from the user task model and from the system task model; the automatic testing unit is adapted to request the system interaction module to start the desired task; the system interaction module is adapted to take the initial state for the desired task and to report to the automatic testing unit its current state; the automatic testing unit is adapted to communicate the current state to the user interaction module; the user interaction module is adapted to make a decision with respect to the next state based on probabilities, and to report the decision to the automatic testing unit. The simulation encompasses the user interaction module to select a next interaction. This interaction is reported to the automatic testing unit which reports it to the system interaction module. The system interaction module then changes to the next state having a lower probability than the state having the highest probability.

According to the second aspect of the invention, the evaluation processing system is adapted to define an optimum or intended path through the model of the system; and to rule-based generate deviations from the defined optimum path in accordance with error classes or usability heuristics. The errors are for example classified into classes relating to goal level, task level, concept level, command level, and/or recognition level.

A usability evaluation processing method for evaluating usability by simulation of an interaction between a user and a system to be evaluated according to the first aspect is also provided. The usability evaluation processing method comprises the steps of: (a) setting up a model describing the behavior of the user of the system to be evaluated; (b) setting up a model describing the behavior of the system to be evaluated; (c) the user behavior model and the system model providing input to an automatic testing unit; (d) automatic detection of estimated user behavior in the automatic testing unit; (e) determining discrepancies between the user model and the system model; (f) weighing of the determined discrepancies; and (g) deriving a usability profile; (h) wherein a probabilistic model through a state chart given by the system is used for the user behavior model.

Preferably, using a probabilistic model comprises generating potential deviations, for each task, from an optimum or intended path through the interaction, and assigning probabilities to each possible path potentially taken by the user. The probabilities are preferably pre-calculated.

The method further comprises the steps of: the automatic testing unit requesting a task from the user task model and from the system task model; the automatic testing unit requesting the system interaction module to start the desired task; the system interaction module taking the initial state for the desired task and reporting to the automatic testing unit its current state; the automatic testing unit communicating the current state to the user interaction module; the user interaction module making a decision with respect to the next interaction based on probabilities, and reporting the decision to the automatic testing unit.

The simulation preferably encompasses the user interaction module selecting a next state having a lower probability than the state having the highest probability.

According to the second aspect of the invention a usability evaluation processing method for evaluating usability by simulation of an interaction between a user and a system to be evaluated is provided. The usability evaluation processing method comprises the steps of: (a) setting up a model describing the behavior of the user of the system to be evaluated; (b) setting up a model describing the behavior of the system to be evaluated; (c) the user behavior model and the system model providing input to an automatic testing unit; (d) automatic detecting of estimated user behavior in the automatic testing unit; (e) determining discrepancies between the user model and the system model; (f) weighing of the determined discrepancies; and (g) deriving a usability profile; (h) wherein user behavior is simulated using rule-based generation of erroneous input according to error classification.

The method preferably further comprises the step of defining an optimum or intended path through the model of the system; rule-based generation of deviations from the defined optimum path in accordance with error classes. The errors are preferably classified into classes relating to goal level, task level, concept level, command level, and/or recognition level. Furthermore, the method comprises the step of weighing of errors.

According to both aspects, the step of detecting estimated user behavior comprises the step of generating log protocols of the simulated interactions. The usability profile is derived from the log protocols.

In the following it is described how, according to the invention, the four models which are only generally shown in Fig. 1 are implemented in detail.

Four types of models are used by the present approach.

The System Task Model (STM) describes the tasks that are supported by a system, i.e. that a user may perform with the help of the system. Preferably, an attribute-value description (slots) for internal task representation is used. Such description is preferably directly derived from the system specification, using e.g. a graphical tool. The system task model does not say anything about the interaction sequences between the user and the system which are necessary to perform the tasks. In order to get a structured overview on the tasks, the STM allows to organize the tasks into a hierarchical list. Therefore compound tasks as well as sub tasks may be defined. The sub tasks may be re-used in many different compound tasks.

See example below:
▼ Tasks related to phone tariffs
   ▼ Find tariff information
      ▼ Find information on inner country tariffs
         Find information on base prices
      ▼ Find information on per call prices
         Find information for calls to stationary phones
         Find information for calls to mobile phones
         Find information on runtimes of contracts
      ► Find information on foreign country tariffs
   ▼ Compare tariffs
      ▼ Find tariff information for x tariffs
         ► Find information on inner country tariffs
         ▼ Find information on foreign country tariffs
         Find information on per call process
   ► Choose a tariff
      ► Tasks related to online tariffs
      ► Tasks related to add-on packages

The User Task Model (UTM) is very similar to the STM, however it describes the potential tasks that a user expects to be able to perform with the system. Therefore, the UTM may include tasks which are also in the STM but it may also contain tasks which are not to be found in the STM. Furthermore, the STM may also include tasks which are not to be found in the UTM. Apart from these discrepancies, the structure of the UTM resembles the structure of the STM, hence including compound tasks as well as sub tasks. The discrepancies between the UTM and the STM already provide first hints on potential usability problems. See example below:
▼ Tasks related to phone tariffs
   ► Find tariff information
   ▼ Compare tariffs
      ► Find tariff information for x tariffs
   ► Choose a tariff
▼ Tasks related to mobile phone tariffs
   ► Find tariff information
   ► Compare tariffs
   ► Choose a tariff
▼ Tasks related to online tariffs
   ▼ Find tariff information
      ► Find information on per minute tariffs
      ► Find information on volume tariffs
      ► Find information on flatrate tariffs
      Find information on runtimes of contracts
      Find information on provided hardware
   ► Check the availability of a product
   ► Compare tariffs
   ► Choose a tariff

The derivation of the user task model may be based on
- a general domain model, i.e. a model of objects and task conceivable for a specific domain;
- user studies carried out with a prototype version of the system, or with a similar system
- the system task model.

The System Interaction Model (SIM) describes the behavior of the system, i.e. the flow of interaction which is coded in the system, as well as its surface structure (i.e. the GUI for a graphical system or the grammar and dialog structure for a spoken dialog system). The invention uses the state-chart approach in order to represent the models. A state-chart is similar to a state machine which represents all the different states the system has as well as all the transitions among those states. It is possible to describe a whole system with a state machine, however in order to reduce the complexity and to improve the structure of the model the invention makes use of state-charts which allow to organize and "compress" ordinary state machines. The general idea of state-charts is known in the art so that only a few key words are discussed herein:
- Super states: Allow to group a number of states into a logical unit. The behavior between the group members may than be described "locally" (i.e. without taking into account the rest of the model). Furthermore, super states help to improve the structure of the model.
- History: For each super state it is possible to memorize the sub state which was active when the super state was left before. If the super state is visited for the first time, a defined default state will be activated within the super state, otherwise the state which is recorded in the history will be activated.
- Transitions: A transition is a link leading from one state to another. Links may connect super states as well as normal states and any mixture thereof.
- Views: A view describes a single state including its visual appearance and also the associated interaction widgets. A view includes a screen shot (or other visual representation) of the system and on top of this image a number of widgets may be placed (e.g. buttons, scroll bars). The widgets emit certain global events when activated (e.g. button was pressed). A view is later associated with a state in the state-chart.
- Speech support: an editor which allows to describe the behavior of a spoken dialog system. Similar to the views described above, the definitions made here are later used in the state-chart.
- Events: Transitions between states are either executed automatically or triggered by events. If a transition is linked to an event it will only take place if the corresponding event is generated while the state machine is in the initial state of the transition.
- Conditions: A transition may also lead to a condition state. This state checks certain conditions and the transition is then immediately routed to another state (depending on the evaluation of the conditions).

Like the system task model, the system interaction module is preferably derived from a formal description of the system.

The User Interaction Model (UIM) defines how a (simulated) user will perform specific tasks with the given system. The UIM is thus a running simulation automatically generating user input. For each task in the UTM (which also has to be defined before), the UIM includes a number of steps leading from an initial system state to a final (or goal) system state. In an ideal world, all users would perform tasks in the appropriate way (or better: a system would be designed in such a way that users will always succeed in performing their tasks in the most appropriate way). However, in the real world it will often happen that the users do not find this ideal track at all or that they get lost or disoriented on the way.

The reasons for the users failure to full fill a task or to use the most eloquent solution are numerous. Sometimes it may be possible to automatically calculate the probability that a user (either a general user or a user with specific characteristics) makes a wrong decision in the course of performing a task with the system (i.e. the user leaves the ideal path towards the system goal state) while in other cases it may not be possible to determine these numbers at all. Therefore, when building the UIM, the system of the invention preferably has a priority to calculate these probabilities automatically but in cases where it is not possible to do so (i.e. if there are no appropriate rules to calculate the probabilities in a certain situation) the workbench is also able to use the necessary numbers provided by the user of the workbench (assuming that a designer should have a certain degree of expertise in the area of usability). Basically three different cases can be distinguished:
1. The relevant probabilities can be computed automatically by the system (best case).
2. The system proposes automatically computed probabilities, and the system designer is encouraged to check and perhaps adapt them.
3. The system offers default probabilities (e.g., based on a uniform distribution over the possible user actions), and the system designer is given an opportunity to modify the probabilities if deemed necessary.
   Except in the best case, the system offers, where possible, context-sensitive links to information that could help the designer specify the probabilities realistically. For example, tables of relevant numbers or guidelines based on previous research. For example, if a screen offers several links that can be followed, each of which is accompanied by a fairly complex natural language description, there may be no way for the system to estimate usefully the probability that the user will choose the correct link in any given situation. But a pointer to a set of guidelines or research results concerning the formulation of link descriptions of the type in question can make it easier for the designer to use his own knowledge of natural language to arrive at realistic probabilities.

In more detail: If a state (or view) includes, for example, 5 different widgets which the (simulated) user could choose to interact with (and which would as a result each lead the SIM to a different state) then the probability for each of the widgets to be chosen by the user has to be calculated. The simplest calculation would mean to assign equal probabilities to all options. However, this would lead to complete random behavior of the UIM. Therefore, rules have to be defined and to be applied in order to improve the probabilities. For example, a rule may say that the right decision (i.e. the one which keeps the user on the ideal track towards the system goal state) should have a significantly higher probability than the rest. Other rules may be based on usability checkers which could for example evaluate the salience of the different widgets.

Thus, the invention suggests using decision probabilities for the UIM. For the model itself, the question how to actually calculate the probabilities is less relevant since it will (technically) work equally well with reasonable numbers as well as with arbitrary guesses. The probabilities could be calculated at runtime (i.e. during simulation execution) or, alternatively, while setting up the models. The fact that probabilities are computed in advance and in effect compiled into the UIM should not be seen as implying that the UIM is simulating the behavior of a user who does not respond to the system's behavior. Rather, the ways in which the user responds to the system are being pre-computed for practical reasons.

During the simulation runs, the different models will have to communicate with each other. As already described above, the automatic testing unit (ATU) will handle the communication between system and user models and it will also write the necessary log files during the simulations so that the results may be used later on in the usability prediction component. The basic mechanism is as follows: The ATU requests a task from the UTM. The provided task is then also requested from the STM. In case the task does not exist in the STM, the simulation can not run and this is noted in the log files. In case the STM holds an appropriate task, the simulation can be started. To do so, the ATU requests the SIM to start the desired task. This will tell the SIM to go to the defined initial state for the task and to report back its current state (including the available interaction options in the case of a GUI based system or the system prompt plus the required information in the case of a spoken dialog system). The ATU will then communicate this data to the UIM and the UIM will produce a corresponding decision based on the pre-calculated probabilities. However, in some cases when the decision does depend on "dynamic data" from within the system (e.g. weather forecast when deciding whether to take the bicycle or the car), the decisions will be influenced by this data during runtime. In this fashion the communication between the UIM and the SIM continues. Depending on the decisions taken by the UIM this will sooner or later either lead to a success in the fulfillment of the task or in failure to do so.

A second aspect of the invention relates to the handling and classification of "erroneous" user behavior. In order to simulate the user behavior, in a first step an optimum path (or intended path) is set as defined by the model of the system. On the basis of this ideal path, in the next step, rule-based deviations are generated in accordance with error classes. Any deviation of the ideal path prolongs the interaction with the system, i.e., the user has not come closer to the target through this "non-ideal" move. Such situation is regarded as an error. The errors are for example classified into the following classes:
1. goal level: this error occurs if the system does not comprises the functionality expected by the user;
2. task-level: in this case the user does not know how the task can be achieved with the system, for example by issuing a command at the wrong time etc.
3. concept level: the user thinks in terms of a different model of the system;
4. command-level: the system cannot recognize commands used by the user;
5. recognition level: speech recognition errors, in case of a speech recognition system.
   The application of such deviations to the system provides the consequences of such specific erroneous input which allow to evaluate the relevance or weight of such errors for the quality und usability of the modeled system for the user.

According to a preferred embodiment of the invention, the first and second aspects are provided in combination.

The simulation engine of the automatic testing unit runs a predefined number of (simulated) interactions between user and system models. The control unit generates logs of the simulated interactions as an output. The logs are annotated by information from all models (system task and interaction models, user task and interaction models), providing a priori information for the following discrepancy detection and weighting modules. Interaction logs are preferably generated for entire dialogues: they are preferably clustered on a simulated-user-basis in order to generate errors typical for specific users or user groups.

The interaction logs also contain timing information, e.g. timestamps based on simulated execution times which are necessary for each user and system action to take place. On the basis of such simulated timestamps, efficiency predictions are preferably generated, e.g. in terms of expected execution times for different tasks, system versions, or user groups. Examples of such timestamps are start and stop interaction (tasks), start and stop system action (e.g., speech prompt), or start and stop user action (e.g., user speech, clicks, etc.).

The usability prediction module provides a link between the instrumental annotation of the dialogue on the one hand, and the user opinion about quality and usability on the other. In this way, a usability profile is established which lists
- the simulated user and system behavior, in terms of interaction parameters
- the frequencies and types of interaction errors
- indices related to the effectiveness, efficiency and expected user satisfaction of the simulated interactions.
   These profiles can be derived for specific sets of tasks, users, and system variants. They serve a summative, diagnostic as well as comparative evaluation of the system under test.

### Brief description of the drawings

In the following the invention is explained in more detail with reference to the accompanying drawings; in which
- Fig. 1: shows the general structure of the system underlying the invention; and
- Figs. 2 to 8: the implementation of one aspect of the present invention by means of a schematic example.

### Description of preferred embodiment

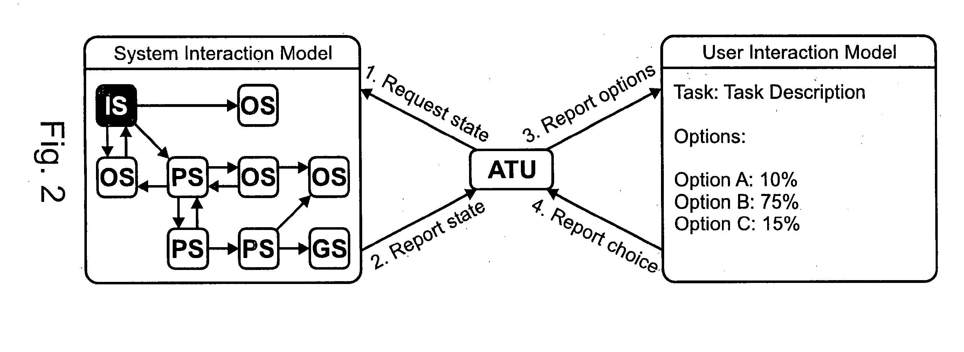

Figs. 2 to 8 show the communications between the system interaction model and the user interaction model via the automatic testing unit in accordance with the present invention.

In the graphs shown in Figs. 2 to 8, those states labeled "PS" are on the ideal path for the given task while those labeled "OS" are off the path. The "IS" state is the initial state of the task while the "GS" state is the goal state. As described above, each step involves requests from the ATU to the SIM and also to the UIM. The sequence of the communicative acts is depicted in the graphs. The UIM at each step has a list of probabilities for the different options given by the SIM. Sometimes the choice of a particular option will involve a condition check instead of a probability. The example starts in Fig. 2 in the initial state right after the ATU has chosen an appropriate task from the UTM which also exists in the STM.

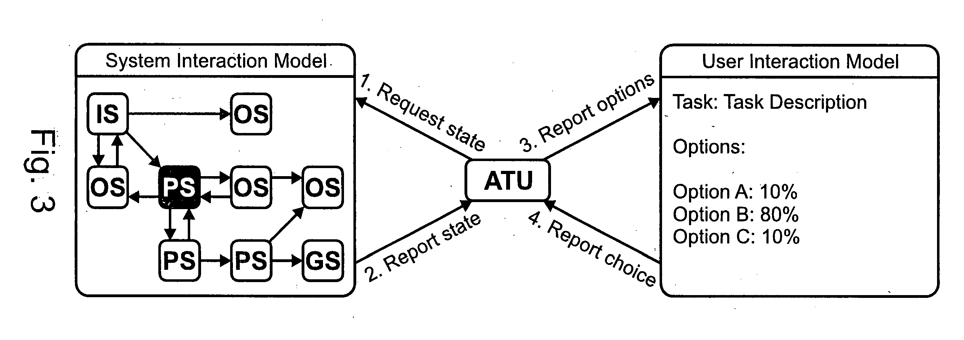

The UIM is confronted with a choice of three options (options are labeled alphabetically starting with an upward arrow and then turning clockwise). In this case it chooses option B which has the highest probability. What is not depicted in the graph is the fact that the SIM has to be informed about the choice of the UIM and will update itself (i.e. move to the next state accordingly). In this case it will move to the linked "PS" state, as shown in Fig. 3.

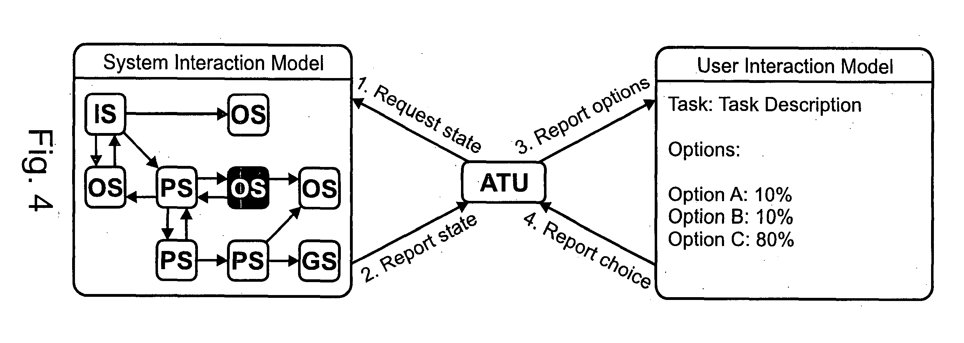

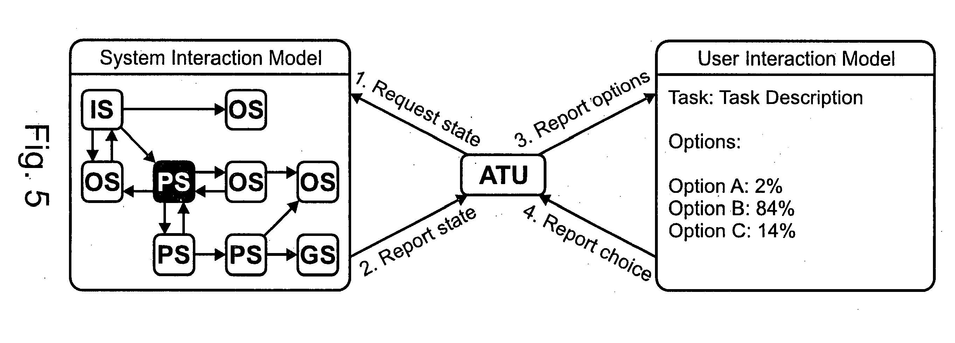

At this step the UIM simulates the case where the user makes a mistake and chooses option A (even though it has a low probability), which is shown in Fig. 4. At this point option C gets the highest probability of 80 percent since it leads the UIM back on track. The UIM chooses option C; see Fig. 5.

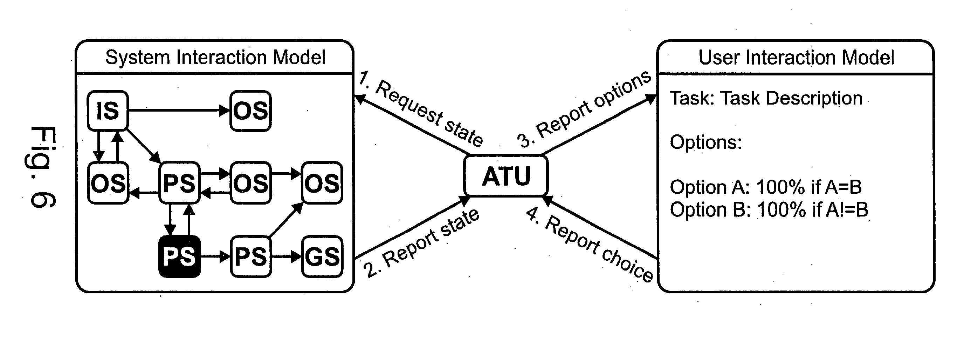

The SIM goes back to the previous state. However, the probabilities for the UIM have changed. The probability of choosing the wrong option again is now significantly lower (since the UIM should have learned something from its previous mistake) and the other two probabilities went up for an equal amount. Now the UIM chooses the right option (B), as shown in Fig. 6.

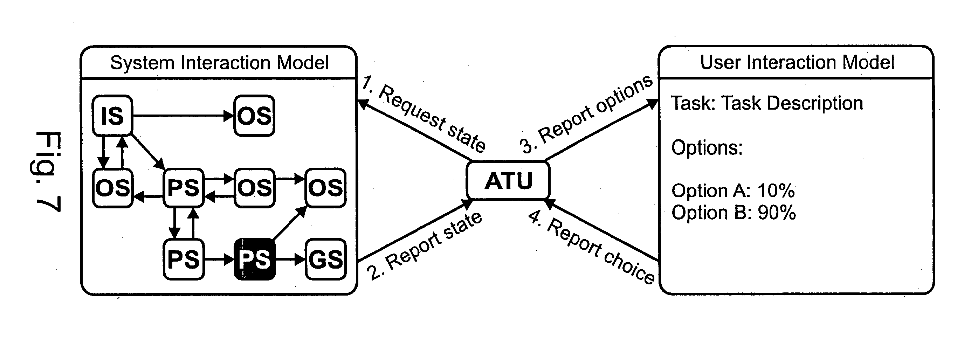

At this point, the UIM takes its next decision based on a condition check. It will go back one step (option A) if A equals B otherwise it will choose option B and proceed). In the example run, A does not equal B and therefore option B is chosen; see Fig. 7.

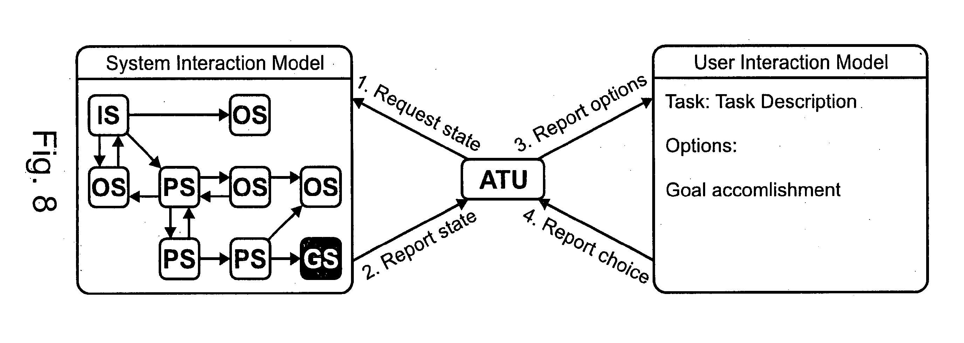

At this state the UIM takes the more probable option B and reaches the goal state; Fig. 8. The goal state is reached and the ATU notes that the simulation run was successfully (even though not optimally) completed.

The present invention is advantageous in that it basically abstracts from the concrete determination methods for the decision probabilities. A basic simulation can be run immediately on the basis of a very simple rule resulting in an equal probability distribution for all decisions. The idea is to provide this general simulation architecture and make it flexible in such a way that basically any kind of additional rule set for determining decision probabilities can be developed later on and easily added to the workbench. The elegance of the approach of the present invention lies in the fact that the core element for good simulations (namely a reasonable calculation of decision probabilities) is left outside of the modeling approach itself. Therefore the presented simulation approach should basically run with any kind of dumb or intelligent rule set, since in the end it will always be based on probabilities.

A further advantage is that the system of the invention can be easily extended with additional rules without changing the architecture again. Thus, the system can be supplemented step-by-step through the addition of more and better usability checkers (i.e., rule sets for decision probability calculation).

## Claims

1. A usability evaluation processing system for evaluating usability by simulation of an interaction between a user and a system to be evaluated, the usability evaluation processing system comprising a user behavior model unit, a system to be evaluated model unit, an automatic testing unit connected to the user behavior model unit and the system model unit, and an evaluation unit connected to the automatic testing unit, wherein a probabilistic model through a state chart given by the system is used for the user behavior model.

2. A usability evaluation processing system for evaluating usability by simulation of an interaction between a user and a system to be evaluated, the usability evaluation processing system comprising a user behavior model unit, a system to be evaluated model unit, an automatic testing unit connected to the user behavior model unit and the system model unit, and an evaluation unit connected to the automatic testing unit, wherein user behavior is simulated using rule-based generation of erroneous input according to error classification.

3. The system of claim 1 or 2, wherein the user behavior model unit comprises a user task model unit and a user interaction model unit.

4. The system of claim 3, wherein the user task model represents potential user tasks with the system to be evaluated, and wherein the user interaction model automatically generates user input by simulation.

5. The system of any of the preceding claims, wherein the system model unit comprises a system task model unit and a system interaction model unit.

6. The system of claim 5, wherein the system task model describes the tasks a user may perform with the help of the system, and wherein the system interaction model describes the flow of interaction coded in the system to be evaluated.

7. The system of any of the preceding claims, wherein the automatic testing unit comprises a control unit and a simulation unit for simulation interactions and generating log protocols.

8. The system of any of the preceding claims, wherein the evaluation unit comprises a discrepancies determination unit for determining discrepancies between user and system model, and a discrepancies weighting unit.

9. The system of claim 8, wherein the evaluation unit further comprises a usability prediction unit for deriving a usability profile.

10. The system of any of the preceding claims if dependent on claim 1, wherein the evaluation processing system is adapted to generate potential deviations, for each task, from an optimum or intended path through the interaction, and to assign probabilities to each possible path potentially taken by the user.

11. The system of claim 10, wherein the probabilities are pre-calculated.

12. The system of claim 10 or 11, wherein the automatic testing unit is adapted to request a task from the user task model and from the system task model; the automatic testing unit is adapted to request the system interaction module to start the desired task; the system interaction module is adapted to take the initial state for the desired task and to report to the automatic testing unit its current state; the automatic testing unit is adapted to communicate the current state to the user interaction module; the user interaction module is adapted to make a decision with respect to the next state based probabilities, and to report the decision to the automatic testing unit.

13. The system of claim 12, wherein the simulation encompasses the user interaction module to select a next state having a lower probability than the state having the highest probability.

14. The system of any of the preceding claims if dependent on claim 2, wherein the evaluation processing system is adapted to define an optimum or intended path through the model of the system; and to rule-based generate deviations from the defined optimum path in accordance with error classes.

15. The system of claim 14, wherein the errors are classified into classes relating to goal level, task level, concept level, command level, and/or recognition level.

16. The system of claim 14 or 15, wherein the weighting unit weights the errors.

17. A usability evaluation processing method for evaluating usability by simulation of an interaction between a user and a system to be evaluated, the usability evaluation processing method comprising the steps of:
a. setting up a model describing the behavior of the user of the system to be evaluated;
b. setting up a model describing the behavior of the system to be evaluated;
c. the user behavior model and the system model providing input to an automatic testing unit;
d. automatic detecting of estimated user behavior in the automatic testing unit;
e. determining discrepancies between the user model and the system model;
f. weighing of the determined discrepancies; and
g. deriving a usability profile;
h. wherein a probabilistic model through a state chart given by the system is used for the user behavior model.

18. The method of claim 17, wherein using a probabilistic model comprises generating potential deviations, for each task, from an optimum or intended path through the interaction, and assigning probabilities to each possible path potentially taken by the user.

19. The method of claim 18, wherein the probabilities are pre-calculated.

20. The method of claim 17, 18, or 19, wherein the user behavior model unit comprises a user task model unit and a user interaction model unit.

21. The method of claim 20, wherein the user task model represents potential user tasks with the system to be evaluated, and wherein the user interaction model automatically generates user input by simulation.

22. The method of any of claims 17 to 21, wherein the system model unit comprises a system task model unit and a system interaction model unit.

23. The method of claim 22, wherein the system task model describes the tasks a user may perform with the help of the system, and wherein the system interaction model describes the flow of interaction coded in the system to be evaluated.

24. The method of any of claims 20 to 23, further comprising the steps of: the automatic testing unit requesting a task from the user task model and from the system task model; the automatic testing unit requesting the system interaction module to start the desired task; the system interaction module taking the initial state for the desired task and reporting to the automatic testing unit its current state; the automatic testing unit communicating the current state to the user interaction module; the user interaction module making a decision with respect to the next state based probabilities, and reporting the decision to the automatic testing unit.

25. The method of claim 24, wherein the simulation encompasses the user interaction module selecting a next state having a lower probability than the state having the highest probability.

26. A usability evaluation processing method for evaluating usability by simulation of an interaction between a user and a system to be evaluated, the usability evaluation processing method comprising the steps of:
a. setting up a model describing the behavior of the user of the system to be evaluated;
b. setting up a model describing the behavior of the system to be evaluated;
c. the user behavior model and the system model providing input to an automatic testing unit;
d. automatic detecting of estimated user behavior in the automatic testing unit;
e. determining discrepancies between the user model and the system model;
f. weighing of the determined discrepancies; and
g. deriving a usability profile;
h. wherein user behavior is simulated using rule-based generation of erroneous input according to error classification.

27. The method of claim 26, further comprising the step of defining an optimum or intended path through the model of the system; rule-based generating of deviations from the defined optimum path in accordance with error classes.

28. The method of claim 26 or 27, wherein the errors are classified into classes relating to goal level, task level, concept level, command level, and/or recognition level.

29. The method of claim 26, 27, or 28, further comprising the weighing of errors.

30. The method of any of claims 17 to 30, wherein the step of detecting estimated user behavior comprises the step of generating log protocols of the simulated interactions.

31. The method of claim 30, wherein the usability profile is derived from the log protocols.

## Amended claims

### Amended claims in accordance with Rule 137(2) EPC.

**1.** A usability evaluation processing system for evaluating usability by simulation of an interaction between a user and a system to be evaluated, the usability evaluation processing system comprising a user behavior model unit, a system to be evaluated model unit, an automatic testing unit connected to the user behavior model unit and the system model unit, and an evaluation unit connected to the automatic testing unit, wherein user behavior is simulated using rule-based generation of erroneous input according to error classification.

**2.** The system of claim 1, wherein the user behavior model unit comprises a user task model unit and a user interaction model unit.

**3.** The system of claim 2, wherein the user task model represents potential user tasks with the system to be evaluated, and wherein the user interaction model automatically generates user input by simulation.

**4.** The system of any of the preceding claims, wherein the system model unit comprises a system task model unit and a system interaction model unit.

**5.** The system of claim 4, wherein the system task model describes the tasks a user may perform with the help of the system, and wherein the system interaction model describes the flow of interaction coded in the system to be evaluated.

**6.** The system of any of the preceding claims, wherein the automatic testing unit comprises a control unit and a simulation unit for simulation interactions and generating log protocols.

**7.** The system of any of the preceding claims, wherein the evaluation unit comprises a discrepancies determination unit for determining discrepancies between user and system model, and a discrepancies weighting unit.

**8.** The system of claim 7, wherein the evaluation unit further comprises a usability prediction unit for deriving a usability profile.

**9.** The system of any of the preceding claims if dependent on claim 1, wherein the evaluation processing system is adapted to define an optimum or intended path through the model of the system; and to rule-based generate deviations from the defined optimum path in accordance with error classes.

**10.** The system of claim 9, wherein the errors are classified into classes relating to goal level, task level, concept level, command level, and/or recognition level.

**11.** The system of claim 9 or 10, wherein the weighting unit weights the errors.

**12.** A usability evaluation processing method for evaluating usability by simulation of an interaction between a user and a system to be evaluated, the usability evaluation processing method comprising the steps of:
a. setting up a model describing the behavior of the user of the system to be evaluated;
b. setting up a model describing the behavior of the system to be evaluated;
c. the user behavior model and the system model providing input to an automatic testing unit;
d. automatic detecting of estimated user behavior in the automatic testing unit;
e. determining discrepancies between the user model and the system model;
f. weighing of the determined discrepancies; and
g. deriving a usability profile;
h. wherein user behavior is simulated using rule-based generation of erroneous input according to error classification.

**13.** The method of claim 12, further comprising the step of defining an optimum or intended path through the model of the system; rule-based generating of deviations from the defined optimum path in accordance with error classes.

**14.** The method of claim 12 or 13, wherein the errors are classified into classes relating to goal level, task level, concept level, command level, and/or recognition level.

**15.** The method of claim 12, 13, or 14, further comprising the weighing of errors.

**16.** The method of any of claims 12 to 15, wherein the step of detecting estimated user behavior comprises the step of generating log protocols of the simulated interactions.

**17.** The method of claim 16, wherein the usability profile is derived from the log protocols.
